# EUROPÄISCHE PATENTSCHRIFT

(11) **EP 1 862 267 B1**
(45) Veröffentlichungstag und Bekanntmachung des Hinweises auf die Patenterteilung: **27.01.2010**
(21) Anmeldenummer: 07007955.3
(22) Anmeldetag: 19.04.2007
(51) Int. Cl.: B25F 5/00, F16H 3/66

(54) **Elektrohandwerkzeuggerät**
Electric hand tool
Outil à main électrique

(30) Priorität: 01.06.2006 DE 102006025538
(43) Veröffentlichungstag der Anmeldung: 05.12.2007
(73) Patentinhaber: Metabowerke GmbH, 72622 Nürtingen (DE)
(72) Erfinder: Maier, Christoph, 73274 Notzingen (DE); Baumann, Martin, 73728 Esslingen (DE)
(74) Vertreter: Langöhrig, Angelika Beate

(56) Entgegenhaltungen:
- DE-A1- 19 625 850
- DE-A1- 19 754 165
- JP-A- 63 101 545

## Beschreibung

Die Erfindung betrifft ein Elektrohandwerkzeuggerät mit einem Antriebsmotor sowie einer Abtriebswelle zum Antrieb eines Elektrowerkzeugs, wobei zwischen Antriebsmotor und Abtriebswelle ein umschaltbares Planetengetriebe mit zwei Getriebestufen vorgesehen ist und wobei jede Getriebestufe ein Hohlrad umfasst, das eine Innenverzahnung aufweist sowie ein Sonnenrad mit einer Außenverzahnung zum Antrieb des Getriebes mit denen die Planetenräder der jeweiligen Getriebestufe kämmen und wobei die Außendurchmesser der Sonnenräder und die Innendurchmesser der Hohlräder der beiden Getriebestufen verschieden sind.
Planetengetriebe in Elektrohandwerkzeugmaschinen einzusetzen ist grundsätzlich bekannt. So zeigt beispielsweise die DE 199 02 187 A1 ein gangumschaltbares Planetengetriebe für Elektrohandwerkzeugmaschinen, wie z.B.

Schrauber, bei dem zur Gangschaltung ein axial verschiebliches Hohlrad vorgesehen ist, dass zur zweiten Planetenstufe gehört, wobei insbesondere drei Planetenstufen vorgesehen sind.

Des Weiteren ist aus der DE 197 54 165 A1 ein Elektrohandwerkzeuggerät, nämlich ein elektrisches Drehwerkzeug, insbesondere ein Akkuschrauber, bekannt, bei dem ein drehmomentabhängig schaltendes Planetengetriebe mit zwei Schaltstufen vorgesehen ist, wobei jede der Schaltstufen ein eigenes äußeres drehbares Hohlrad aufweist. Zum Schalten von der einen Schaltstufe in die andere Schaltstufe erfolgt ein Arretiereingriff mit jeweils einem Hohlrad einer der zwei Schaltstufen.

Nachteilig bei den vorgenannten Gestaltungen sind die aufwendigen Mechaniken zum Wechsel der Schaltstufen und der hiermit verbundene höhere Verschleiß.

Es ist daher Aufgabe der Erfindung, ein Elektrohandwerkzeuggerät mit einem Planetengetriebe bereitzustellen, das nur einen axial geringen Bauraum benötigt und eine einfache Wechselmechanik zwischen den Schaltstufen bereitstellt.

Die Erfindung löst diese Aufgabe durch ein Elektrohandwerkzeuggerät der gattungsgemäßen Art, bei dem die Planetenräder einer Getriebestufe an jeweils einem Planetenträger gehalten sind und der Abtrieb über den Planetenträger einer Getriebestufe erfolgt und die Hohlräder der Getriebestufen drehfest miteinander verbunden sind, wobei in einer ersten Schaltstufe ein Schaltmittel in Arretiereingriff mit den Hohlrädern steht und diese blockiert und in einer zweiten Schaltstufe der nicht dem Abtrieb dienende Planetenträger durch einen Arretiereingriff eines Schaltmittels blockiert ist.

Durch ein derartiges Getriebe ergibt sich eine verhältnismäßig einfache Abtriebs- und Schaltanordnung, die in einem höheren Schaltkomfort und einer längeren Lebensdauer resultiert. Alle Zahnräder befinden sich bei der vorliegenden erfindungsgemäßen Anordnung ständig im Eingriff, wodurch ebenfalls ein geringer Verschleiß resultiert.

Erfindungsgemäß ist dabei vorgesehen, dass die Hohlräder der beiden Getriebestufen drehfest miteinander verbunden sind. Insbesondere kann es sich hierbei um ein einstückiges Doppelhohlrad handeln, wobei das Hohlrad der dem Abtrieb dienenden Getriebestufe einen geringeren Durchmesser aufweisen kann als das Hohlrad der anderen Getriebestufe. Entsprechend kann auch das Sonnenrad im Bereich der dem Abtrieb dienenden Getriebestufe mit einem geringeren Außendurchmesser ausgestattet sein als das Sonnenrad im Bereich der anderen Getriebestufe. Die Größenverhältnisse sind dabei abhängig vom gewünschten Übersetzungsverhältnis.

Erfolgt nun in einem ersten Schaltvorgang eine Blockierung der miteinander verbundenen Hohlräder, so kann sich der Planetenträger der nicht dem Abtrieb dienenden Schaltstufe frei drehen. Wobei Ebensolches auch für die Planetenräder der dem Abtrieb dienenden Planetenstufe gilt, die wiederum den Planetenträger der entsprechenden Getriebestufe in eine Drehbewegung versetzt, so dass dieser die Abtriebswelle mit hoher Geschwindigkeit antreibt.

Im langsamen Gang wird dagegen der Planetenträger der nicht dem Abtrieb dienenden Planetenstufe blockiert und die Hohlräder der beiden Getriebestufen, die drehfest miteinander verbunden sind, können sich drehen. Hierbei wird in dieser Getriebestufe das Hohlrad mit einem den Sonnenrädern entgegengesetzten Drehsinn angetrieben.

Hieraus resultiert eine andere Dreh- bzw. Abrollgeschwindigkeit der Planeten der dem Abtrieb dienenden Planetenstufe und somit eine andere Drehgeschwindigkeit des Planetenträgers dieser Planetenstufe. Es erfolgt somit ein langsamerer Antrieb der Abtriebswelle und somit ein langsamerer Antrieb eines Elektrohandwerkzeuggeräts, das hiermit gekoppelt ist.

Nach einer ersten Ausgestaltung kann hierbei vorgesehen sein, dass die Sonnenräder drehfest miteinander gekoppelt sind. Die Sonnenräder können hierbei ebenfalls vorzugsweise einstückig miteinander verbunden sein.

Weiterhin ist vorgesehen, dass das Schaltmittel zum Schalten der Getriebestufen von einer Schaltstufe in die nächste axial verschieblich ist bzw. axial verschieblich sind zum in und außer Eingriff bringen. Dabei kann vorgesehen sein, dass als Schaltmittel ein oder mehrere Schaltringe vorgesehen sind, wobei insbesondere die Schaltmittel, die den Planetenträger blockieren, und die Schaltmittel, die das Hohlrad blockieren, einstückig miteinander gekoppelt sind und insbesondere in einem einzelnen Schaltring zusammengefasst sind. Dieser Schaltring kann dann zwischen dem Getriebe und einem Getriebegehäuse, in das das Getriebe aufgenommen ist, vorgesehen sein.

Es ist hierbei besonders bevorzugt, wenn als Elektrohandwerkzeuggerät ein Schrauber vorgesehen ist, in den ein entsprechendes Getriebe eingebaut ist.

Die Erfindung wird im Folgenden anhand einer Zeichnung näher erläutert. Dabei zeigen:
- Figur 1: eine schematische Darstellung eines Längsschnitts durch das Getriebe und
- Figur 2: in den Darstellungen a) und b) eine schematische Veranschaulichung der Getriebestellungen in der jeweiligen Schaltstufe.

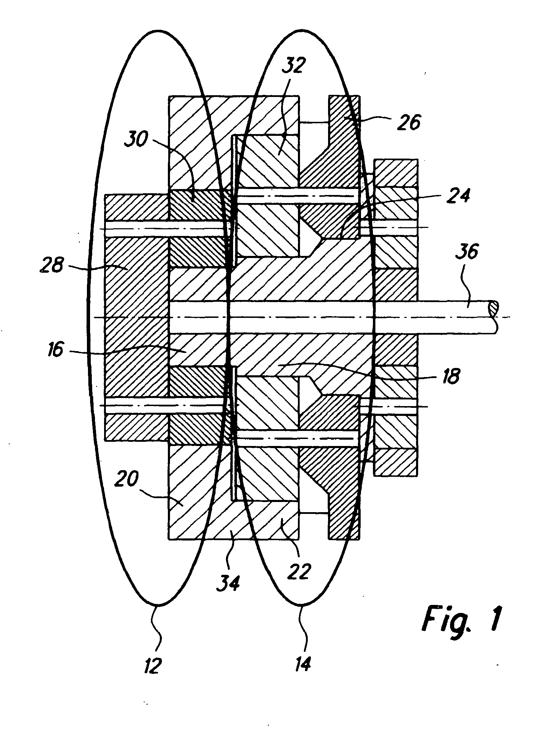

Figur 1 zeigt eine schematisierte Darstellung eines Getriebes, wie es in einem erfindungsgemäßen Elektrohandwerkzeuggerät eingesetzt werden kann. Das Getriebe weist hierbei zwei Getriebestufen, die mit den Bezugszeichen 12 und 14 versehen sind, auf. Jede der Getriebestufen umfasst ein Sonnenrad 16, 18 sowie ein Hohlrad 20, 22. Die Sonnenräder 16 und 18 sind hierbei einstückig miteinander verbunden. Dabei weist das Sonnenrad 18 im Bereich der Getriebestufe 14 einen größeren Außendurchmesser auf als das Sonnenrad 16 im Bereich der anderen Getriebestufe 12. Des Weiteren weist das Sonnenrad einen dritten Durchmesser 24 auf, in dessen Bereich ein Planetenträger 26 der Getriebestufe 14 auf dem Sonnenrad umläuft. Der Abtrieb, d. h. der Antrieb einer Abtriebswelle, erfolgt hierbei über einen Planetenträger 28 der Getriebestufe 12. Jedem Planetenträger 26 und 28 sind Planeten 30, 32 zugeordnet, die eine Außenverzahnung aufweisen und sich in ständigem Eingriff mit der Außenverzahnung der Sonnenräder 18 und 16 sowie der Innenverzahnung der Hohlräder 20 und 22 befinden. Die Hohlräder 20 und 22 sind dabei drehfest miteinander verbunden und einstückig hergestellt. Es handelt sich hierbei um ein Doppelhohlrad 34. Erfolgt nun ein Antrieb über eine Antriebswelle 36, die mit einem Antriebsmotor (nicht dargestellt) verbunden ist, so werden hierdurch die Planeten 30 und 32 der Getriebestufen in Rotation versetzt, wobei die Planeten in umgekehrter Richtung zu den Sonnenrädern 16 und 18 rotieren.

Darüber hinaus wirkt die Antriebswelle 36 auf eine dritte Getriebestufe 37, die eine Drehmomentkupplung 39 beinhaltet.

In einer ersten langsamen Schaltstufe erfolgt nun eine Blockierung des Planetenträgers 26 der Getriebestufe 14, wobei sich das Doppelhohlrad 34 frei dreht. Das Doppelhohlrad 34 dreht dabei in ebenfalls entgegengesetzter Richtung zu den Sonnenrädern 16 und 18. Über das sich hierdurch ergebende Übersetzungsverhältnis erfolgt nun ein langsameres Umlaufen der Planeten 30 im Doppelhohlrad 34 - und damit eine langsamere Drehung des Planetenträgers 28.

In einer zweiten schnellen Schaltstufe wird nun das Doppelhohlrad 34 blockiert durch einen vorgesehenen Schaltring, der axial verschieblich ist und entweder im Arretiereingriff mit dem Planetenträger 26 oder dem Doppelhohlrad 34 steht. Der Planetenträger 26 kann in dieser schnellen Schaltstufe nun frei rotieren. Hieraus resultiert darüber hinaus am Planetenträger 28 ein anderes Übersetzungsverhältnis und somit ein schnellerer Antrieb eines Elektrohandwerkzeuggerätes.

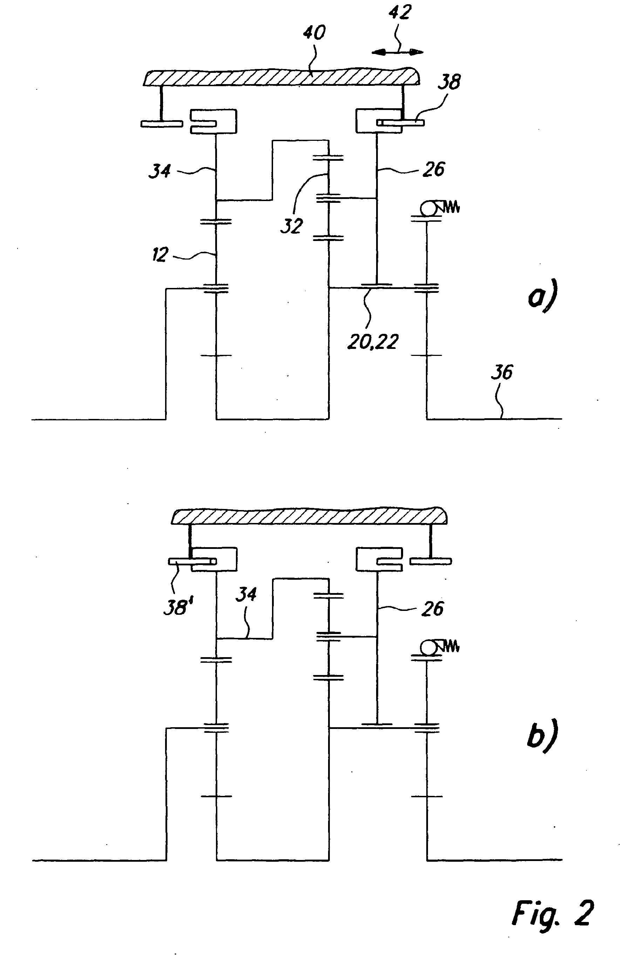

Figur 2 zeigt in den Darstellungen a) und b) die jeweiligen Getriebestellungen. Hierbei sind gleiche Elemente mit gleichen Bezugszeichen wie in Figur 1 versehen. Mittels des Antriebs wird ein Sonnenrad angetrieben, das hier mit 16, 18 bezeichnet ist. Auf dem Sonnenrad läuft ein Planetenträger 26 einer Getriebestufe 14 um. Der Planetenträger ist in der Darstellung a) durch ein Schaltmittel 38 blockiert. Das Schaltmittel 38, das an einem Schaltring 40 festgelegt ist, ist dabei axial in Pfeilrichtung 42 verschieblich. Mit dem Planetenträger 26 sind erste Planetenräder 32 gekoppelt, die mit einem Doppelhohlrad 34 in kämmendem Eingriff stehen. Darüber hinaus steht eine zweite Getriebestufe über Planetenräder 30 sowie einen Planetenträger 26 mit einem Abtrieb in drehendem Kontakt. Erfolgt nun ein Blockieren des ersten Planetenträgers, so laufen die Planeten 32 lediglich noch um sich selbst um, ohne jedoch im Hohlrad umzulaufen. Hierüber erfolgt ein Antrieb des Doppelhohlrads 34, so dass die zweite Planetenstufe 12 sowohl durch die Drehung des Sonnenrades als auch durch die Drehung des Doppelhohlrades 34 beeinflusst ist und sich hieraus die Abtriebsgeschwindigkeit am Abtrieb des Planetenträgers 28 ergibt.

In Darstellung b) ist nun die zweite Schaltstufe mit blockiertem Doppelhohlrad 34 gezeigt, bei dem ein Schaltmittel 38' mit dem Doppelhohlrad 34 in Kontakt steht. Der Planetenträger 26 kann hier nun frei rotieren. Die Planeten der Getriebestufe 12 laufen dann im stehenden Hohlrad mit einer anderen Geschwindigkeit um und liefern so eine andere Abtriebsgeschwindigkeit.

Weitere Vorteile und Merkmale der Erfindung ergeben sich aus den übrigen Anmeldungsunterlagen. Durch die vorliegende Erfindung kann ein Getriebe geschaffen werden, das einen geringen axialen Bauraum benötigt und darüber hinaus durch ständiges Ineingriffstehen sämtlicher Zahnräder verschleißarm arbeitet.

## Patentansprüche

1. Elektrohandwerkzeuggerät mit einem Antriebsmotor sowie einer Abtriebswelle (36) zum Antrieb eines Elektrowerkzeug, wobei zwischen Antriebsmotor und Abtriebswelle (36) ein umschaltbares Planetengetriebe mit zwei Getriebestufen (12, 14) vorgesehen ist, und wobei jede Getriebestufe (12, 14) ein Hohlrad (20, 22) umfasst, das eine Innenverzahnung aufweist, sowie ein Sonnenrad (16, 18) mit einer Außenverzahnung zum Antrieb des Getriebes, mit denen die Planetenräder (30, 32) der jeweiligen Getriebestufe (12, 14) kämmen, und wobei die Außendurchmesser der Sonnenräder (16, 18) und die Innendurchmesser der Hohlräder (20, 22) der beiden Getriebestufen (12, 14) verschieden sind, **dadurch gekennzeichnet, dass** die Planetenräder (30, 32) einer Getriebestufe (12, 14) an jeweils einem Planetenträger (26, 28) gehalten sind und der Abtrieb über den Planetenträger (28) einer Getriebestufe (12) erfolgt und die Hohlräder (20, 22) der Getriebestufen (12, 14) drehfest miteinander verbunden sind, wobei in einer ersten Schaltstufe ein Schaltmittel (38') in Arretiereingriff mit den Hohlrädern (20, 22) steht und diese blockiert und in einer zweiten Schaltstufe der nicht dem Abtrieb dienende Planetenträger (26) durch einen Arretiereingriff eines Schaltmittels (38) blockiert ist.

2. Elektrohandwerkzeuggerät nach Anspruch 1, **dadurch gekennzeichnet, dass** die Sonnenräder (16, 18) drehfest miteinander gekoppelt sind.

3. Elektrohandwerkzeuggerät nach Anspruch 1 oder 2, **dadurch gekennzeichnet, dass** die Schaltmittel (38, 38') zum Schalten der Getriebestufen axial verschieblich sind zum in und außer Eingriff bringbar sind.

4. Elektrohandwerkzeuggerät nach einem der vorangehenden Ansprüche, **dadurch gekennzeichnet, dass** das Getriebe in ein Getriebegehäuse aufgenommen ist.

5. Elektrohandwerkzeuggerät nach einem der vorangehenden Ansprüche, **dadurch gekennzeichnet, dass** das Schaltmittel (38, 38') an einem Schaltring (40) festgelegt ist.

6. Elektrohandwerkzeuggerät nach einem der vorangehenden Ansprüche, **dadurch gekennzeichnet, dass** es ein Schrauber ist.

## Claims

1. Electric hand tool comprising a drive motor and a driven shaft (36) for driving an electric tool, wherein a switchable planetary gear comprising two gear stages (12, 14) is provided between the drive motor and the driven shaft (36), wherein each gear stage (12, 14) comprises a ring gear (20, 22) with an inner toothing, and a sun wheel (16, 18) with an outer toothing for driving the gear, with which the planet wheels (30, 32) of the respective gear stage (12, 14) mesh, wherein the outer diameters of the sun wheels (16, 18) and the inner diameters of the ring gears (20, 22) of the two gear stages (12, 14) are different, **characterized in that** the planet wheels (30, 32) of a gear stage (12, 14) each being held on one respective planet carrier (26, 28), and the output is realized via the planet carrier (28) of a gear stage (12), wherein the ring gears (20, 22) of the gear stages (12, 14) are connected to each other such that they cannot rotate relative to each other, and a switching means (38') is in locking engagement with the ring gears (20, 22) in a first switching stage to block them, wherein, in a second switching stage, the planet carrier (26) which is not used for output is blocked by locking engagement with a switching means (38).

2. The device of claim 1, **characterized in that** said first and said second sun wheels (16, 18) are coupled to each other such that they cannot rotate relative to each other.

3. The device of claim 1 or 2, **characterized in that** said switching means (38, 38') can be axially displaced into and out of engagement for switching said switching stages.

4. The device of one of the preceding claims, **characterized in that** the gear is within a gear housing.

5. The device of one of the preceding claims, wherein said switching means (38, 38') are fixed to a switching ring (40).

6. The device of one of the preceding claims, wherein the device is a screwdriver.

## Revendications

1. Outil à main électrique comprenant un moteur d'entraînement et un arbre mené (16) destinés à entraîner un outil électrique, un engrenage planétaire commutable doté de deux étages de transmission (12, 14) étant prévu entre le moteur d'entraînement et l'arbre mené (36), et chaque étage de transmission (12, 14) comportant une couronne de train planétaire (20, 22) comprenant une denture intérieure ainsi qu'une roue solaire (16, 18) dotée d'une denture extérieure destinée à entraîner l'engrenage, avec lesquelles s'engrènent les roues satellites (30, 32) de l'étage de transmission (12, 14) respectif, et les diamètres extérieurs des roues solaires (16, 18) et les diamètres intérieurs des couronnes de train planétaire (20, 22) des deux étages de transmission (12, 14) étant différents, **caractérisé en ce que** les roues satellites (30, 32) d'un étage de transmission (12, 14) sont retenues sur respectivement un porte-satellite (26, 28) et la prise de mouvement s'effectuant par l'intermédiaire du porte-satellite (28) d'un étage de transmission (12) et les couronnes de train planétaire (20, 22) des étages de transmission (12, 14) étant accouplées solidaires en rotation l'une à l'autre, un moyen de commutation (38') étant en prise de verrouillage avec les couronnes de train planétaire (20, 22) dans un premier étage de commutation et bloquant lesdites couronnes et le porte-satellite (26) ne servant pas à la prise du mouvement étant bloqué dans un second étage de transmission par une mise en prise de verrouillage d'un moyen de commutation (38).

2. Outil à main électrique selon la revendication 1, **caractérisé en ce que** les roues solaires (16, 18) sont accouplées solidaires en rotation l'une à l'autre.

3. Outil à main électrique selon la revendication 1 ou 2, **caractérisé en ce que** les moyens de commutation (38, 38') sont mobiles axialement pour commuter les étages de transmission et peuvent être amenés en prise et hors de prise.

4. Outil à main électrique selon l'une des revendications précédentes, **caractérisé en ce que** la transmission est logée dans un carter de transmission.

5. Outil à main électrique selon l'une des revendications précédentes, **caractérisé en ce que** le moyen de commutation (38, 38') est fixé sur une bague de commutation (40).

6. Outil à main électrique selon l'une quelconque des revendications précédentes, **caractérisé en ce qu'**il s'agit d'une vis.
